# EUROPEAN PATENT SPECIFICATION

(11) **EP 3 828 402 B1**
(45) Date of publication and mention of the grant of the patent: **06.08.2025**
(21) Application number: 20206626.2
(22) Date of filing: 10.11.2020
(51) Int. Cl.: F02C 7/06, F01D 25/20, F02C 7/32, F02C 7/36

(54) **GAS TURBINE ENGINE HAVING FIRST AND SECOND LUBRICATION SYSTEMS AND ASSOCIATED METHOD**
GASTURBINENENMOTOR MIT ERSTEM UND ZWEITEM SCHMIERSYSTEM, SOWIE VERFAHREN
MOTEUR À TURBINE À GAZ AVEC PREMIER ET DEUXIÈME SYSTÈMES DE LUBRIFICATION ET PROCÉDÉ ASSOCIÉ

(30) Priority: 25.11.2019 US 201916694193
(43) Date of publication of application: 02.06.2021
(73) Proprietor: Rolls-Royce Corporation, Indianapolis, Indiana 46225 (US)
(72) Inventor: Gebhard, John, Fishers, IN Indiana 46037 (US); Kempers, Adam, Indianapolis, IN Indiana 46214 (US); Gallagher, Jeremy, Carmel, IN Indiana 46033 (US)
(74) Representative: Rolls-Royce plc

(56) References cited:
- EP-A1- 3 543 476
- EP-A1- 3 557 009
- US-A1- 2015 369 082
- US-A1- 2015 369 128
- US-A1- 2017 284 535
- US-A9- 2018 163 625

## Description

### Field of the disclosure

This disclosure relates to gearboxes for gas turbine engines, and, in particular to lubrication systems for gearboxes.

### Background

Gas turbine engines often have multiple gearboxes that require lubrication. These gas turbines have a variety of drawbacks, limitations, and disadvantages. Accordingly, there is a need for inventive systems, methods, components, and apparatuses described herein.

United States patent application US 2015/369082 A1 discloses a lubrication system for a turbine engine. The lubrication system comprises first lubrication system which includes a first turbine engine component that is fluidly coupled with a first lubricant heat exchanger and a second lubricant circuit which includes a second turbine engine component that is fluidly coupled with a second lubricant heat exchanger. The second lubricant circuit is fluidly separate from the first lubricant circuit.

European patent application EP 3557009 A1 discloses a lubrication system for a gas turbine engine. The lubrication system comprises first and second lubrication systems for supplying the gearbox. The first lubrication system supplying oil from the oil tank and the second lubrication system for supplying oil form the sump when it reaches a predetermined level.

United states patent application US 2017/284535 A1 discloses a lubrication system for a drive system of a tilt rotor aircraft. The lubrication system having first and second lubrication systems that are connected to the drive gearboxes for the tilt rotor aircraft. The lubrication system having a failsafe reservoir in case of failure.

### Summary

The present disclosure provides a gas turbine engine as set out in the appended claims.

In a first aspect the present disclosure provides a gas turbine engine for an aircraft, the gas turbine engine comprising: a shaft fixed to a compressor of the gas turbine engine; at least one of a turboprop and a turbofan; a power gearbox having a power output shaft fixed to the at least one of the turboprop and the turbofan, wherein the power gearbox receives an input rotation from the shaft; an auxiliary gearbox having an auxiliary output shaft powering at least one auxiliary component of the gas turbine engine; a first lubrication system; and a second lubrication system that is separated from the first lubrication system, wherein the first lubrication system circulates a first lubricant through the power gearbox, and the second lubrication system circulates a second lubricant through the auxiliary gearbox. The gas turbine engine has a failsafe valve that, when actuated, provides a fluid connection between the first lubrication system and the second lubrication system, and the first lubrication system and the second lubrication system lack a fluid connection when the failsafe valve is closed. The first lubrication system (114) lacks a filter.

### Brief description of the drawings

The embodiments may be better understood with reference to the following drawings and description. The components in the figures are not necessarily to scale. Moreover, in the figures, like-referenced numerals designate corresponding parts throughout the different views.
**FIG. 1** illustrates a cross-sectional view of an example of a gas turbine engine.
**FIG. 2** illustrates a cross-sectional view of an example of a power gearbox for powering at least one of a turboprop and a turbofan.
**FIG. 3** illustrates a block diagram of an example of a gas turbine engine having a first lubrication system and a separate second lubrication system.

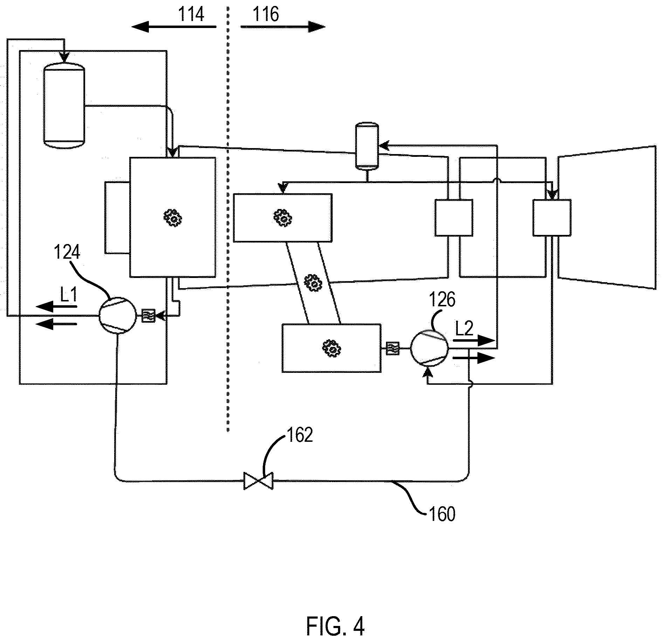

**FIG. 4** illustrates a block diagram of a second example of a gas turbine engine having a first lubrication system and a separate second lubrication system, wherein a failsafe valve is placed between the first lubrication system and the second lubrication system.
**FIG. 5** illustrates a block diagram of an example of a power gearbox having an integrated pump.
**FIG. 6** illustrates a block diagram of a third example of a gas turbine engine having a first lubrication system and a separate second lubrication system driven by a common pump.
**FIG. 7** illustrates a block diagram of a third example of a gas turbine engine having a first lubrication system and a separate second lubrication system, wherein a common pumping unit circulates lubricant through each of the first lubrication system and the second lubrication system.

### Detailed description

Aspects and embodiments of the present disclosure will now be discussed with reference to the accompanying figures. Further aspects and embodiments will be apparent to those skilled in the art.

By way of an introductory example, a power gearbox may drive at least one of a turboprop and a turbofan in a gas turbine engine. A first lubrication system may be dedicated to the power gearbox. A separate second lubrication system may lubricate and/or cool other components, such as other gearboxes of the gas turbine engine.

One interesting feature of the devices, systems, and methods described below may be that the separate and isolated lubrication systems allow for optimal lubricant selection for critical components of the gas turbine engine, thereby increasing the lifespan of certain components and reducing the maintenance burden.

Another interesting feature of the devices, systems, and methods described below may be that the separate and isolated lubrication systems save valuable space within the confines of the gas turbine engine, thereby providing room for other components.

Another interesting feature of the devices, systems, and methods described below may be that the separate and isolated lubrication systems can save valuable space within the confines of the gas turbine engine, thereby providing room for other components.

Another interesting feature of the devices, systems, and methods described below may be that the separate and isolated lubrication systems reduce the need for filtering and/or increase the lifespan of a lubricant within at least one of the lubrication systems.

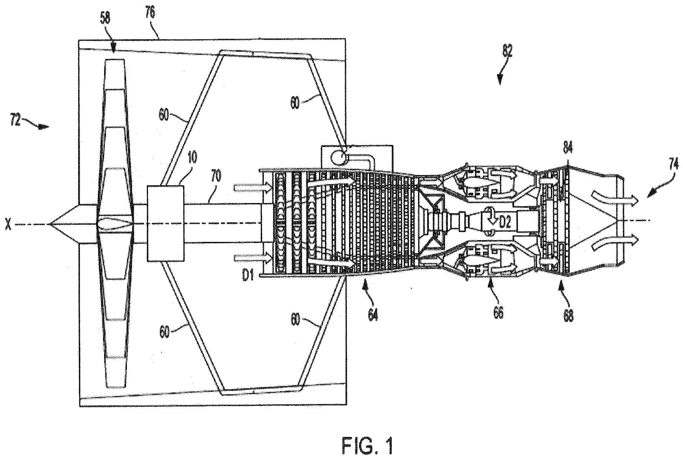

**FIG. 1** is a cross-sectional view of a gas turbine engine 82. In some examples, the gas turbine engine 82 may supply power to and/or provide propulsion of an aircraft. Examples of the aircraft may include a helicopter, an airplane, an unmanned space vehicle, a fixed wing vehicle, a variable wing vehicle, a rotary wing vehicle, an unmanned combat aerial vehicle, a tailless aircraft, a hover craft, and any other airborne and/or extraterrestrial (spacecraft) vehicle. Alternatively or in addition, the gas turbine engine 82 may be utilized in a configuration unrelated to an aircraft such as, for example, an industrial application, an energy application, a power plant, a pumping set, a marine application (for example, for naval propulsion), a weapon system, a security system, a perimeter defense or security system.

The gas turbine engine 82 may take a variety of forms in various embodiments. Though depicted as an axial flow engine, in some forms the gas turbine engine 82 may have multiple spools and/or may be a centrifugal or mixed centrifugal/axial flow engine. In some forms, the gas turbine engine 82 may be a turboprop, a turbofan, a geared turbofan, or a turboshaft engine. Furthermore, the gas turbine engine 82 may be an adaptive cycle and/or variable cycle engine. Other variations are also contemplated.

The gas turbine engine 82 may include an intake section 72, a compressor section 64, a combustion section 66, a turbine section 68, and an exhaust section 74. During operation of the gas turbine engine 82, fluid received from the intake section 72, such as air, travels along the direction D1 and may be compressed within the compressor section 64. The compressed fluid may then be mixed with fuel and the mixture may be burned in the combustion section 66. The combustion section 66 may include any suitable fuel injection and combustion mechanisms. The hot, high pressure fluid may then pass through the turbine section 68 to extract energy from the fluid and cause a shaft 70 of a turbine 84 in the turbine section 68 to rotate, which in turn drives the compressor section 64. Discharge fluid may exit the exhaust section 74.

As noted above, the hot, high pressure fluid passes through the turbine section 68 during operation of the gas turbine engine 82. As the fluid flows through the turbine section 68, the fluid passes between adjacent blades of the turbine 84 causing the shaft 70 to rotate. The rotating turbine 84 may turn a shaft 70 in a rotational direction D2, for example. The shaft 70 may rotate around an axis of rotation, which may correspond to a centerline X of the turbine 84 in some examples.

The gas turbine engine 82 may also include a turbofan 58 (or alternatively a turboprop, not shown) located upstream from the compressor section 64. The turbofan 58 may receive fluid from the intake section 72 and direct it downstream. A portion of the fluid passing through the turbofan 58 may enter the compressor section 64 while another portion of the fluid may bypass the compressor section 64. To better direct fluid passing through the turbofan 58, the turbofan may be surrounded by a shroud 76. The shroud 76 may be a component which encircles the turbofan 58. Examples of the shroud 76 may include a duct or a cylindrical shell. The shroud 76 may extend over other portions of the gas turbine engine 82, such as the compressor section 64.

The turbofan 58 may be coupled to the shaft 70 through a power gearbox 10 (e.g., where the power gearbox 10 includes an output shaft fixed to the turbofan 58. The power gearbox 10 may be any component which mechanically transforms rotations D2 of the shaft 70 into rotations of the turbofan 58. Examples of the power gearbox 10 may include a coaxial helical inline gearbox, a bevel helical gearbox, or a planetary gearbox (also known as an epicyclic gear train). The turbofan 58, shroud 76, and power gearbox 10, may be supported by struts 60 coupled to different points of the gas turbine engine 82. For example, as illustrated in FIG. 1, the struts may extend between the power gearbox 10 and the shroud 76, and between the shroud 75 and the compressor section 64. The struts 60 may extend between other portions of the gas turbine engine 82 as well.

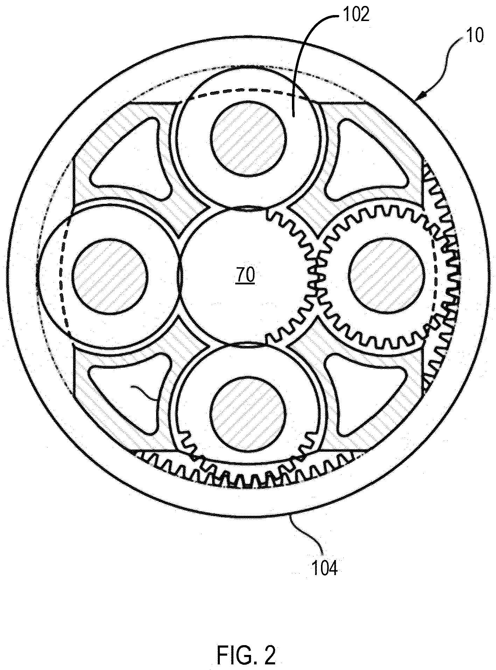

**FIG. 2** illustrates a cross-sectional view of the power gearbox 10. The power gearbox 10 may include a plurality of gears 102 which rotate in response to the rotation of the shaft 70. The gears 102 may be any object which is capable of mechanically transferring rotation of one component to another component. For example, the gears 102 may transfer the rotation of the shaft 70 to a rotation of the turbofan 58 depicted in FIG. 1. Non-limiting examples of the gears 102 may include spur gears, helical gears, or herringbone gears forming a planetary gear train. The plurality of gears 102 may rotate a ring gear 104 which encircles the plurality of gears 102. The ring gear 104 may be any component which, through interaction with the plurality of gears, rotates at a reduced rate compared to the rotation of the shaft 70. Examples of the ring gear 104 may include a spur ring gear, a helical ring gear, or a herringbone ring gear. The ring gear 104 may be included in other embodiments of the power gearbox 10. Several examples of non-limiting gearbox embodiments are shown in United States patent application US 2020/0284337 A1.

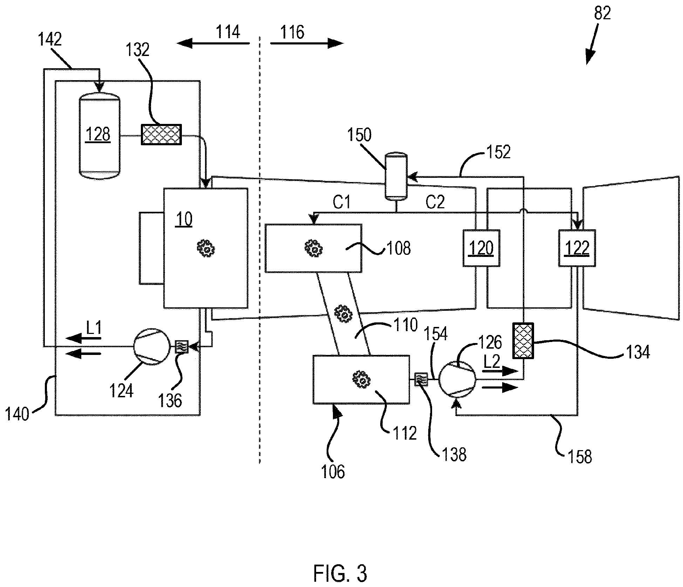

Referring to **FIG. 3****,** the gas turbine engine 82 may additionally include one or more accessory drives, such as the depicted accessory drive 106. The accessory drive 106 may provide power to certain engine components, including auxiliary components such as starters, integrated drive generators (IDG), fuel pumps or other pumps, hydraulic components, lubrication/scavenge components (such as pumps), a de-oiler, generators (for aircraft services and/or engine control), or any other suitable component(s). The accessory drive 106 may include an internal gearbox 108 (or inlet gearbox) that transforms rotation of the shaft 70 (shown in FIG. 1) into rotation of components within a transfer gearbox 110 (e.g., where the transfer gearbox 110 is mechanically coupled to the internal gearbox 108). The internal gearbox 108 may include a bevel gear for direct drive by the shaft 70 (shown in FIG. 1), though an idler shaft or gear may additionally be included, and the transfer gearbox 110 may include any gear structure for transferring associated mechanical energy downstream. In particular, the transfer gearbox 110 may be mechanically coupled to at least one auxiliary gearbox 112, and the transfer gearbox 110 may supply the auxiliary gearbox 112 with mechanical energy for powering auxiliary components. The auxiliary gearbox 112 may be fixed to the shroud 76 (FIG. 1) or another portion of the gas turbine engine housing/casing, but it may alternatively be located in a different location. The auxiliary gearbox 112 may be coupled to one or more auxiliary components.

As shown in FIG. 3, the gas turbine engine 82 includes a first lubrication system 114 devoted to the power gearbox 10 and a second lubrication system 116 devoted to the accessory drive 106 (including its gearboxes). Optionally, the second lubrication system 116 may also provide lubrication to the auxiliary components 120 and/or other turbomachinery components 122 (e.g., high-power electronic components, gears, bearings, and/or any other contact-based mechanical components requiring lubrication or cooling).

The first lubrication system 114 may include a variety of components related to lubrication and cooling. For example, certain included components may include (but are not limited to) a first lubrication pump 124, a first oil tank 128, a first oil cooler 132, and a first oil filter 136. Certain components may be omitted, and/or others may be included.

During operation, the first pump 124 may provide the pressure necessary to circulate a first lubricant L1 through the first lubrication system 114. The first lubricant L1 may include any suitable fluid capable of reducing frictional interaction between mechanical components, such as oil. In the depicted example, the first lubricant L1 may flow from the first pump 124 to the first oil tank 128 (via piping 140) to the first oil tank 128. Examples of the first pump 124 may include fixed displacement pumps or variable displacement pumps, such as a rotary vane pump, a piston pump, or a centrifugal pump. In certain exemplary embodiments, the first pump 124 is driven by the power gearbox 10.

The piping 140 may include a first supply line 142 arranged to direct the first lubricant L1 from the first oil tank 128, through the heat exchanger or first oil cooler 132 (e.g., to transfer heat away from the first lubricant L1), and then to the power gearbox 10. The heated first lubricant L1 may then flow through the first oil filter 136 and then back to the first pump 124. As will be appreciated by those skilled in the art, certain components may be duplicated, omitted, or re -arranged such that the sequence of the loop changes (e.g., the first oil cooler 132 may be located between the power gearbox 10 and the first pump 124, for example).

Similarly, the second lubrication system 116 may include a variety of components related to lubrication and cooling. For example, certain included components may include (but are not limited to) a second lubrication pump 126, a second oil tank 150, a second oil cooler 134, a second supply line 152, a second return line 154, and a second oil filter 138. Certain components may be omitted, and/or others may be included.

During operation, the second pump 126 may provide the pressure necessary to cause a second lubricant L2 to flow through the second lubrication system 116. As discussed in more detail below, the second lubricant L2 may have different characteristics than the first lubricant L1 (or not). In the depicted example, the second lubricant L2 may flow from the second pump 126 to the second oil tank 156 (via piping 158). The piping 158 may include a plurality of parallel lines arranged to direct the second lubricant L2 from the second oil tank 156 to certain gearboxes and/or certain auxiliary component(s) 120. For example, as shown, the second pump 126 directs the second lubricant L2 through a first conduit C1 to the internal gearbox 108 for lubrication and cooling. The second lubricant L2 may flow directly from the internal gearbox 108 to the transfer gearbox 110 (or alternatively tubing may be included therebetween). Similarly, the second lubricant L2 may flow directly from the transfer gearbox 110 to the auxiliary gearbox 112 (or alternatively tubing may be included therebetween). Optionally, a second parallel conduit C2 may be included to direct the second lubricant L2 for lubrication and/or cooling of the auxiliary component 120, but in other embodiments, this second conduit C2 may be in series with the first conduit C1 (or excluded entirely). The second lubricant L2 may then flow through the second oil filter 138 and back to the second pump 126. As will be appreciated by those skilled in the art, certain components may be duplicated, omitted, or re-arranged such that the sequence of the loop changes (e.g., the heat exchanger 134 may be located just before the second pump 126, for example).

A feature of the embodiment of FIG. 3 is that the first lubrication system 114 is wholly separate from the second lubrication system 116 when the gas turbine engine 82 is in a normal operational state. That is, the first lubricant L1 of the first lubrication system 114 does not flow through the piping 158 of the second lubrication system 116, and vice versa, during normal operation. This feature may be advantageous for several reasons. For example, in certain applications, an optimal oil for cooling the power gearbox 10 may be different from an optimal oil for cooling one or more of the components of the accessory drive 106 and/or other turbomachinery components 122. For example, one of the first lubrication system 114 and the second lubrication system 116 may include a respectively high (e.g., at least 10% higher, such as at least 20% higher, than the respective other lubrication system) of at least one of the following: viscosity, water content, calorific content, specific gravity, a different characteristic typically selected with an engine oil, and/or a combination thereof.

Additionally or alternatively, desirable oil conditions may be different in each lubrication system. For example, it may be advantageous for the first lubrication system 114 to operate with the first lubricant L1 at a higher pressure than the second lubricant of the second lubrication system 116. For example, one of the first lubrication system 114 may have an operational oil pressure (e.g., during idle speed) that is at least 10 psi higher than an operational oil pressure in the second lubrication system 116 at the same engine speed at least at one location within the respective circuits, such as at least 20 psi higher, at least 30 psi higher, at least 50 psi higher, etc. (e.g., any reasonable pressure differential based on the engine design). The opposite is also true (e.g., the second lubrication system 116 may have a higher operational pressure than the first oil system 114 at least at one location in the respective circuits). Similarly, it may be advantageous for the first lubricant L1 and the second lubricant L2 to function at different temperatures (e.g., having an average temperature difference of at least about 10 degrees Celsius), different mass and/or volumetric flow rates (e.g., where one flow rate is at least 10% higher than the other).

Separating the first lubricant L1 and the second lubricant L2 also may provide advantages from a filtering perspective. For example, the power gearbox 10, which may include extreme tolerances from a quality perspective, may have a respectively-high cleanliness level relative to certain components cooled and lubricated by the second lubrication system 116. Since the loading on bearings and gears within the power gearbox 10 can be extremely high (making precise and clean lubrication critical), keeping the first lubricant L1 within a dedicated circuit for the power gearbox 10 may isolate the first lubricant L1 from components associated with lower cleanliness. This may increase the lifespan of the first lubricant L1 (and also the power gearbox 10) relative to other embodiments. Additionally, changing the second lubricant L2 may be accomplished without changing the relatively clean first lubricant L1, which may reduce maintenance costs particularly in applications where the first lubrication system 114 requires significantly more lubricant than the second lubrication system 116 (e.g., due to high demands of the power gearbox 10). Further, it is contemplated that the first lubrication system 114 may exclude a filter altogether, which may reduce weight and increase available space for other components.

Advantageously, separating the first lubrication system 114 from the second lubrication system 116 may also allow for a more efficient design that saves space relative to other embodiments. For example, since the first lubrication system 114 and the second lubrication system 116 do not need to interconnect (and may include separate pumps, filters, etc.), each separate lubrication system can be designed to strategically fit in spaces near their respective components, saving valuable space within the housing of the gas turbine engine. Further, certain components that are typical in other embodiments of gas turbine engines may be omitted altogether (saving weight, space, and cost). For example, the present teaching may allow for the omission of a bifurcation panel generally included in existing gas turbine engines, which is commonly nested in a congested location at the aft end of the fan and used to bifurcate oil between different components (such as a power gearbox and auxiliary components).

The separation systems are connected via tubing 160 that includes a failsafe valve 162. As shown, the tubing 160 may connect the first pump 124 to the second lubrication system 116 such that, if the second pump 126 fails (or the second lubrication system 116 otherwise fails, such as due to loss of lubrication fluid), the first pump 124 may circulate the first lubrication fluid L1 through the second lubrication system 116 to avoid system failure. While not shown, it is contemplated that the second pump 126 could be used similarly to circulate the second lubrication fluid L2 through the first lubrication system 114 during an emergency situation. The failsafe valve 162 may remain closed in normal operational states, but may open to connect the systems to prevent system failure in rare circumstances.

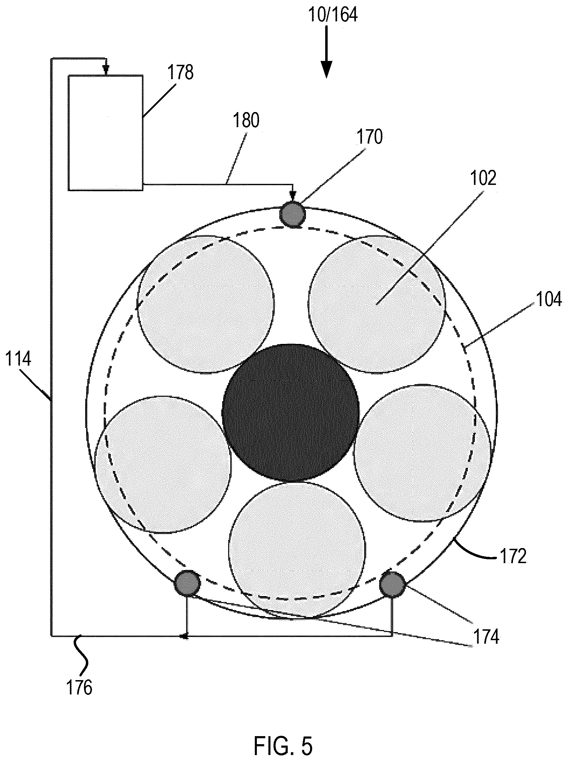

Referring to **FIG. 5****,** in some embodiments, the first lubrication system 114 may include an integrated oil pump 164 within the power gearbox 10 (e.g., while optionally excluding a wholly separate pump dedicated to the first lubrication system 114, such as the first pump 124 shown in FIG. 3). Notably, the power gearbox 10 of FIG. 5 includes five (5) planetary gears 102 rather than four (as in the embodiment of FIG. 2), but the integrated pump described herein may be applicable to both emboldens (in addition to others). Such an integrated oil pump 164 may replace the first pump 124 shown in FIG. 3, for example, thereby saving space, weight, and overall cost of the gas turbine engine. As depicted by FIG. 5, the power gearbox 10 may include the ring gear 104 (shown as a dashed line) that rotates (e.g., upon movement of the planetary gears 102) to drive at least one lubrication supply element 170 fixed to an outer housing 172. The lubrication supply element 170 may include a small oil pump that includes a single (or plurality) of lubrication gerotors, vanes, and/or gears within a relatively small housing, for example. The lubrication supply element 170 provides the first lubrication L1 to the gears and bearings of the power gearbox 10. The power gearbox 10 may also include at least one scavenge elements 174, which also may be driven by rotation of the ring gear 104. Similarly, the scavenge elements 174 may include a relatively small version of an oil pump and include of a singular, or plurality of, gerotors, vanes or gears. These units also have an integral drive-shaft that can motor the oil pump. When the first lubricant is scavenged by the scavenge elements 174, it may then move through a return line 176 to an oil tank 178 and then back to the lubrication supply element 170 through a supply line 180. While not shown, additional elements may be included (e.g., a filter, heat exchanger, an additional pump, etc.). Advantageously, the present embodiment allows the power gearbox 10 to provide the pumping function itself through the integrated oil pump 164, and without a separate pumping device.

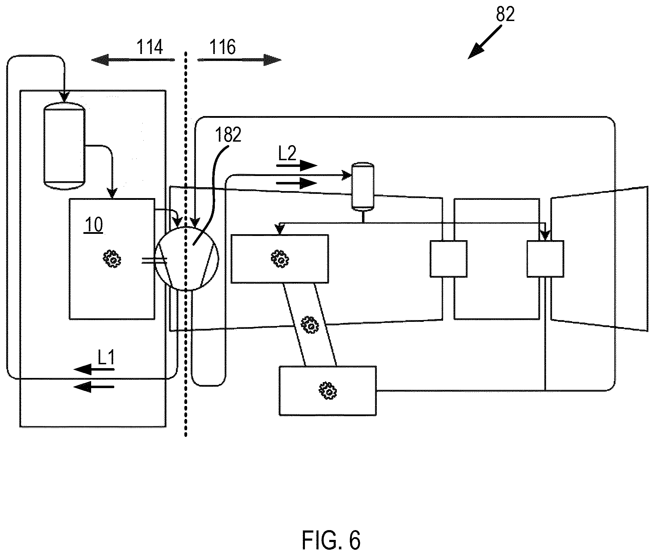

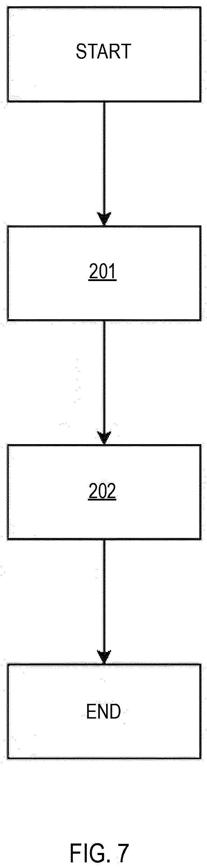

While the embodiment of FIG. 5 shows a single lubrication supply element 170, more than one may be included. Further, while two scavenge elements 174 are shown, more or fewer may be included. **FIG. 6** shows another arrangement of the gas turbine engine 82 similar to the embodiment of FIG. 3 above but with a different pump configuration. As shown in FIG. 6, the first lubrication system 114 and the second lubrication system 116 are wholly separate (and the first lubricant L1 and second lubricant L2 do not intermix). However, rather than two separate pumps (e.g., the first pump 124 and the second pump 126 shown in FIG. 3), a single pumping unit 182 provides the energy for circulating lubricant through each of the first lubrication system 114 and the second lubrication system 116. The pumping unit 182 preferably includes two separate pumping chambers such that the first lubricant L1 and the second lubricant L2 o not intermix. Providing a single pumping body may save space, reduce weight, and provide relatively high energy efficiency relative to other embodiments. In particular, it is contemplated that the pumping unit 182 (e.g., all pumping chambers) may be powered by the power gearbox 10. Other power sources may additionally or alternatively be used. For example, any of the pumps discussed herein may be powered by electric motor(s).**FIG. 7** shows an exemplary method for operating one or more of the embodiments described above. For example, at a first step 201, the above-described first lubricant L1 may be supplied to the first lubrication system 114. Similarly, at a second step 202, the second lubricant L2 may be supplied to the second lubrication system 116. As discussed above, the first lubrication system 114 may circulate the first lubricant L1 through the power gearbox 10, the second lubrication system L2 may circulate the second lubricant L2 through at least one auxiliary component 120, and the first lubricant L2 may be wholly excluded from the second lubrication system 116.

While various embodiments have been described, it will be apparent to those of ordinary skill in the art that many more embodiments and implementations are possible within the scope of the following claims.

## Claims

1. A gas turbine engine (82) for an aircraft, the gas turbine engine comprising:
a shaft (70) fixed to a compressor (64) of the gas turbine engine;
at least one of a turboprop and a turbofan (58);
a power gearbox (10) having a power output shaft fixed to the at least one of the turboprop and the turbofan, wherein the power gearbox receives an input rotation from the shaft;
an auxiliary gearbox (112) having an auxiliary output shaft powering at least one auxiliary component of the gas turbine engine;
a first lubrication system (114); and
a second lubrication system (116) that is separated from the first lubrication system,
wherein the first lubrication system circulates a first lubricant (L1) through the power gearbox;
**characterised in that**:
the second lubrication system circulates a second lubricant (L2) through the auxiliary gearbox; and the gas turbine engine has a failsafe valve (162) that, when actuated, provides a fluid connection between the first lubrication system (114) and the second lubrication system (116), and the first lubrication system (114) and the second lubrication system (116) lack a fluid connection when the failsafe valve (162) is closed, and
wherein the first lubrication system (114) lacks a filter.

2. The gas turbine engine of claim 1, wherein the power gearbox (10) includes at least one lubrication supply element (170) that is mechanically coupled to a rotatable ring gear (104) of the power gearbox, wherein the power gearbox also includes at least one scavenge element (174) mechanically coupled to the ring gear, and wherein a supply line (180) directs the first lubricant (11) from the at least one scavenge element to the at least one lubrication supply element.

3. The gas turbine engine of claim 1 or 2, further comprising a pumping unit (182) that is driven by the power gearbox (10), wherein the pumping unit causes circulation of the first lubricant (L1) through the first lubrication system (114), and wherein the pumping unit causes circulation of the second lubricant (l2) through the second lubrication system (116).

4. The gas turbine engine of claim 1 or 2, wherein the first lubrication system (114) includes a first pump (124), wherein the second lubrication system (116) includes a second pump (126), and wherein the first pump and the second pump are operable independently.

5. The gas turbine engine of claim 4, wherein the first pump (124) is driven by the power gearbox (10).

6. The gas turbine engine of any preceding claim, wherein the first lubricant (L1) is excluded from the second lubrication system (116), and wherein the second lubricant (L2) is excluded from the first lubrication system (114).

7. The gas turbine engine of any preceding claim, wherein the first lubrication system (114) includes a first operation pressure, wherein the second lubrication system (116) includes a second operation pressure, and wherein the first operation pressure is greater than the second operation pressure.

8. The gas turbine engine of any preceding claim, wherein the first lubricant (L1) is a different lubricant type than the second lubricant (L2).

## Patentansprüche

1. Gasturbinenmotor (82) für ein Flugzeug, wobei der Gasturbinenmotor Folgendes umfasst:
eine Welle (70), die an einem Kompressor (64) des Gasturbinenmotors befestigt ist;
mindestens einen von einem Turboprop und einem Turbofan (58);
ein Leistungsgetriebe (10) mit einer Leistungsabtriebswelle, die an dem mindestens einen des Turboprops und des Turbofans befestigt ist, wobei das Leistungsgetriebe eine Eingangsdrehung von der Welle entgegennimmt;
ein Hilfsgetriebe (112) mit einer Hilfsabtriebswelle, die mindestens eine Hilfskomponente des Gasturbinenmotors antreibt;
ein erstes Schmiersystem (114); und
ein zweites Schmiersystem (116), das separat von dem ersten Schmiersystem ist,
wobei das erste Schmiersystem ein erstes Schmiermittel (L1) durch das Leistungsgetriebe umwälzt;
**dadurch gekennzeichnet, dass**:
das zweite Schmiersystem ein zweites Schmiermittel (L2) durch das Hilfsgetriebe umwälzt; und
der Gasturbinenmotor ein ausfallsicheres Ventil (162) aufweist, das bei Betätigung eine Fluidverbindung zwischen dem ersten Schmiersystem (114) und dem zweiten Schmiersystem (116) bereitstellt, und dem ersten Schmiersystem (114) und dem zweiten Schmiersystem (116) eine Fluidverbindung fehlt, wenn das ausfallsichere Ventil (162) geschlossen ist, und
wobei dem ersten Schmiersystem (114) ein Filter fehlt.

2. Gasturbinenmotor nach Anspruch 1, wobei das Leistungsgetriebe (10) mindestens ein Schmiermittelversorgungselement (170) beinhaltet, das mechanisch mit einem drehbaren Hohlrad (104) des Leistungsgetriebes gekoppelt ist, wobei das Leistungsgetriebe auch mindestens ein Rückförderelement (174) beinhaltet, das mechanisch mit dem Hohlrad gekoppelt ist, und wobei eine Versorgungsleitung (180) das erste Schmiermittel (11) von dem mindestens einen Rückförderelement zu dem mindestens einen Schmiermittelversorgungselement leitet.

3. Gasturbinenmotor nach Anspruch 1 oder 2, ferner umfassend eine Pumpeinheit (182), die von dem Leistungsgetriebe (10) angetrieben wird, wobei die Pumpeinheit eine Umwälzung des ersten Schmiermittels (L1) durch das erste Schmiersystem (114) bewirkt und wobei die Pumpeinheit eine Umwälzung des zweiten Schmiermittels (12) durch das zweite Schmiersystem (116) bewirkt.

4. Gasturbinenmotor nach Anspruch 1 oder 2, wobei das erste Schmiersystem (114) eine erste Pumpe (124) beinhaltet, wobei das zweite Schmiersystem (116) eine zweite Pumpe (126) beinhaltet und wobei die erste Pumpe und die zweite Pumpe unabhängig betreibbar sind.

5. Gasturbinenmotor nach Anspruch 4, wobei die erste Pumpe (124) von dem Leistungsgetriebe (10) angetrieben wird.

6. Gasturbinentriebwerk nach einem vorhergehenden Anspruch, wobei das erste Schmiermittel (L1) aus dem zweiten Schmiersystem (116) ausgeschlossen ist und wobei das zweite Schmiermittel (L2) aus dem ersten Schmiersystem (114) ausgeschlossen ist.

7. Gasturbinenmotor nach einem vorhergehenden Anspruch, wobei das erste Schmiersystem (114) einen ersten Betriebsdruck beinhaltet, wobei das zweite Schmiersystem (116) einen zweiten Betriebsdruck beinhaltet und wobei der erste Betriebsdruck größer als der zweite Betriebsdruck ist.

8. Gasturbinenmotor nach einem vorhergehenden Anspruch, wobei das erste Schmiermittel (L1) ein anderer Schmiermitteltyp als das zweite Schmiermittel (L2) ist.

## Revendications

1. Moteur à turbine à gaz (82) pour un aéronef, le moteur à turbine à gaz comprenant :
un arbre (70) fixé à un compresseur (64) du moteur à turbine à gaz ;
au moins l'un d'un turbopropulseur et d'un turboréacteur à double flux (58) ;
une boîte d'engrenages de puissance (10) possédant un arbre de sortie de puissance fixé à l'au moins un du turbopropulseur et du turboréacteur à double flux, ladite boîte d'engrenages de puissance recevant une rotation d'entrée en provenance de l'arbre ;
une boîte d'engrenages auxiliaire (112) possédant un arbre de sortie auxiliaire alimentant au moins un composant auxiliaire du moteur à turbine à gaz ;
un premier système de lubrification (114) ; et
un second système de lubrification (116) qui est séparé du premier système de lubrification,
ledit premier système de lubrification faisant circuler un premier lubrifiant (L1) à travers la boîte d'engrenages de puissance ;
**caractérisé en ce que** : le second système de lubrification fait circuler un second lubrifiant (L2) à travers la boîte d'engrenages auxiliaire ; et
le moteur à turbine à gaz possède une soupape à sécurité intégrée (162) qui, lorsqu'elle est actionnée, fournit une communication fluidique entre le premier système de lubrification (114) et le second système de lubrification (116), et le premier système de lubrification (114) et le second système de lubrification (116) ne possèdent pas de communication fluidique lorsque la soupape à sécurité intégrée (162) est fermée, et ledit premier système de lubrification (114) ne possédant pas de filtre.

2. Moteur à turbine à gaz de la revendication 1, ladite boîte d'engrenages de puissance (10) comprenant au moins un élément d'alimentation en lubrifiant (170) qui est couplé mécaniquement à une couronne rotative (104) de la boîte d'engrenages de puissance, ladite boîte d'engrenages de puissance comprenant également au moins un élément de récupération (174) couplé mécaniquement à la couronne, et une ligne d'alimentation (180) dirigeant le premier lubrifiant (11) à partir de l'au moins un élément de récupération vers l'au moins un élément d'alimentation en lubrifiant.

3. Moteur à turbine à gaz de la revendication 1 ou 2, comprenant en outre une unité de pompage (182) qui est entraînée par la boîte d'engrenages de puissance (10), ladite unité de pompage entraînant la circulation du premier lubrifiant (L1) à travers le premier système de lubrification (114), et ladite unité de pompage entraînant la circulation du second lubrifiant (12) à travers le second système de lubrification (116).

4. Moteur à turbine à gaz de la revendication 1 ou 2, ledit premier système de lubrification (114) comprenant une première pompe (124), ledit second système de lubrification (116) comprenant une seconde pompe (126), et ladite première pompe et ladite seconde pompe pouvant fonctionner indépendamment.

5. Moteur à turbine à gaz de la revendication 4, ladite première pompe (124) étant entraînée par la boîte d'engrenages de puissance (10).

6. Moteur à turbine à gaz d'une quelconque revendication précédente, ledit premier lubrifiant (L1) étant exclu du second système de lubrification (116), et ledit second lubrifiant (L2) étant exclu du premier système de lubrification (114).

7. Moteur à turbine à gaz d'une quelconque revendication précédente, ledit premier système de lubrification (114) comprenant une première pression de fonctionnement, ledit second système de lubrification (116) comprenant une seconde pression de fonctionnement, et ladite première pression de fonctionnement étant supérieure à la seconde pression de fonctionnement.

8. Moteur à turbine à gaz d'une quelconque revendication précédente, ledit premier lubrifiant (L1) étant un type de lubrifiant différent du second lubrifiant (L2).
